Europäisches Patentamt

European Patent Office

Office européen des brevets

(11) Publication number : **0 484 025 A1**

# (12) EUROPEAN PATENT APPLICATION

(21) Application number : **91309694.7**

(22) Date of filing : **21.10.91**

(51) Int. Cl.⁵ : **F01D 5/28**

(30) Priority : **31.10.90 US 607358**

(43) Date of publication of application :
**06.05.92 Bulletin 92/19**

(84) Designated Contracting States :
**CH DE FR GB IT LI NL SE**

(71) Applicant : **GENERAL ELECTRIC COMPANY**
**1 River Road**
**Schenectady, NY 12345 (US)**

(72) Inventor : **Peterson, Lance Gordon**
**RD2, Peaceable Street**
**Ballston Spa, New York 12020 (US)**
Inventor : **Foster, Allan David**
**1425 Valencia Road**
**Schenectady, New York 12309 (US)**

(74) Representative : **Pratt, Richard Wilson**
**London Patent Operation G.E. TECHNICAL**
**SERVICES CO. INC. Burdett House 15/16**
**Buckingham Street**
**London WC2N 6DU (GB)**

(54) **Turbine blade and production thereof.**

(57)  A directionally solidified industrial gas tur-
bine engine blade (10) is produced by a process
including the steps of cold working and zone
heat treating the tip portion (12) of the airfoil of
the blade to transform columnar microstructure
therein to equiaxed microstructure with random
grain boundary orientation.

FIG.1.

EP 0 484 025 A1

## Field of the Invention

The present invention relates generally to the art of development and control of microstructure, and is more particularly concerned with a novel directionally solidified industrial gas turbine engine blade having unique cyclic fatigue life, and with a new method for producing the blade with an airfoil of columnar grain microstructure having a tip portion of equiaxed grain microstructure.

## Background of the Invention

Directionally solidified industrial gas turbine engine blades or buckets afford important mechanical properties advantages over those of randomly oriented microstructures and consequently are widely used in land-based and marine gas turbine engines in spite of certain drawbacks. Limited cyclic fatigue life has been a principal shortcoming of these solidified products and while efforts have been made in general recognition of this condition, to the best of our knowledge none has provided a satisfactory answer to that problem.

## Summary of the Invention

In accordance with this invention, predicated on the new concepts set below, the cyclic fatigue life of a directionally solidified industrial gas turbine engine blade can be substantially prolonged. Further, this result can be gained consistently and without incurring any offsetting technical disadvantage and at only minor additional production cost.

A key novel concept is to provide a physical barrier to directionally solidified grain boundary crack initiation, fatigue life being limited by the tendency for the columnar structure to crack along the elongated grain boundaries. Thus by having the blade tip portion microstructure in equiaxed form with random grain boundary orientation, the tendency for cracking to develop along the columnar grain boundaries is substantially surpressed and even eliminated by virtue of the fact that columnar grain boundaries are not exposed at the tip of the airfoil.

Another new concept is to recrystallize the columnar grain microstructure in the air foil tip portion thereby producing a protective equiaxed grain microstructure in that critical part of the blade structure. This can be done to advantage by cold working and zone heat treating the blade tip. Alternatively, residual casting stresses and high solution heat treatment can serve the purpose. In either case, the major part of the airfoil microstructure remains unchanged and the mechanical properties and corrosion resistance of the blade are not detrimentally effected.

The size of the tip portion, that is the length of the part of the airfoil in which the microstructure is thus transformed, is not critical. Rather, it is a matter of choice and balancing recrystallizing processing requirements and columnar microstructure benefits. Preferably, the tip portion is only about 1/4 to 1/2 inch long, that is about 1/10 to 1/20 of the airfoil length.

The foregoing new results and advantages are obtained without modifying blade shape or dimensions or altering blade alloy chemistry.

Briefly described in its method aspect, this invention comprises the steps of providing a gas turbine engine blade having an airfoil of columnar microstructure, and recrystallizing the columnar grain microstructure in the tip portion of the airfoil to transform it substantially completely into equiaxed grain microstructure of random orientation.

Likewise generally described in its article aspect, a gas turbine engine blade of this invention has an airfoil of columnar microstructure in which the grain boundaries extend generally axially of the blade , the airfoil having a tip portion the microstructure of which consists only or mainly of equiaxed grains of random grain boundry orientation.

## Detailed Description of the Invention

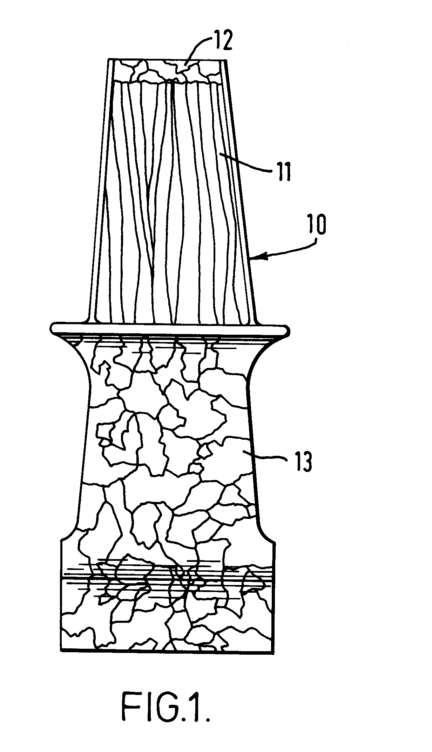

As shown on the drawing accompanying and forming a part of this specification, a preferred embodiment of this invention takes the form of an industrial gas turbine engine blade or bucket 10 which has a unique combination of microstructural regions. Thus blade 10 has an airfoil 11 of directionally solidified columnar microstructure and a tip portion 12 of the airfoil constituting about one tenth of its length of recrystallized microstructure in which grains are equiaxed with grain boundary directions at random. Root 13 of blade 10 has a microstructure of equiaxed grains. The two equiaxed microstructure regions are thus disposed at the ends of the columnar microstructure region as the elongated grains extend from root 13 to tip portion 12, the grain boundaries in that major part of the airfoil 11 being oriented generally lengthwise in the bucket, i.e. parallel generally to the bucket major axis.

This unique microstructural combination is created in accordance with our preferance practice by first producing blade 10 with an equiaxed root 13 and a columnar airfoil 12 by directional solidification practice presently in general use in commercial production and generally known in detail by those skilled in the art.

Tip portion 12 is then heat treated to recrystallize the microstructure in the free end of airfoil 11, the remainder of the airfoil being shielded against heating effects to prevent undesired recrystallization of the columnar microstructure. A zone heat treatment technique known to those skilled in the art may be used for this purpose, but we prefer to use induction heating means. Also, we prefer to cold work tip portion 12 prior to subjecting it to recrystallization heat treatment, and for this purpose shot peening is our choice.

Since recrystallization kenetics are controlled by heat treating temperature, time at temperature, and the amount of residual stress, it will be understood that machining is an alternative to shot peening and that, in fact, residual stresses of casting may serve the same purpose, particularly when a high solution treatment is applied to tip portion 12 to insure initiation and completion of microstructural transformation.

The following is an illustrative, but not limiting, example of the practice of this invention as it might be carried out for the purposes and with the new results and advantages set out above:

Example

A commercial nickel-base superalloy of the General Electric Company known in the trade as GTD-111 is used to cast three first stage blades or buckets for a utility power generating gas turbine engine. Each blade is the standard size-nine inches long, including 4 1/2 inch airfoil. Casting is carried out to produce directionally solidified blades by pouring molten metal into an open ended mold resting on a water cooled chill plate. The chill plate is positioned on top of a vertical ram that can be withdrawn from the furnace at some predetermined rate. Withdrawal rate from the furnace is one of the key parameters controlling development of columnar grain structure because formation of that structure is dependent on the presence of a large thermal gradient between the solidified material already out of the furnace and the molten material still within it. Knowing the ram withdrawal rate the blade height, the operator controls where the microstructural zone should begin and end. Cooling is controlled so that it takes place either at the solid-to-liquid interface or uniformly around the mold circumference, to produce either columnar structure or equiaxed grains. A blade of the desired hybrid microstructure is thus produced simply by the exercise of temperature control of the solidification process.

On removing the resulting directionally solidified blades form the mold, one of them is provided with a protective jacket leaving only the airfoil tip portion (about 1/4 inch of its free end) exposed. The blade tip portion is then shot peened in accordance with usual practice known generally to those skilled in the art. Thereafter the blade is positioned with the shot peened tip portion only in an induction heated chamber where it is maintained while being subjected to a substantially constant temperature approximating 800° F for 30 minutes. Then on confirming that the columnar microstructure in the top portion of the airfoil has been substantially entirely converted to equiaxed microstructure, the blade is ready for installation and service in a utility gas turbine engine.

The second directionally solidified blade is similarly heat treated for the same purpose by placing it in a zone heat treatment furnace with only the airfoil tip portion in a part of the furnace where the temperature is sufficiently high (i.e. about 950° F) to accomplish the desired microstructural transformation in about 45 minutes. The remaining part of the airfoil and the root portion of the blade are maintained at a lower temperature during this heat treatment period to preserve their respective original microstructures. The temperature to which the tip portion is subjected is higher than that applied to the shot peened blade tip portion because of the significant difference between the residual stresses in the tip portions of the two blades.

Finally, the third blade , which is cast with a slightly heavier tip portion, is machined to shape and size and then with a machining stresses imparted to the tip portion, that part of the blade is subjected to a temperature about 900°F for about 30 minutes. The remaining portion of the airfoil and the root of the airfoil are again maintained at a lower temperature during this heat treatment to preserve original microstructures intact.

## Claims

1. An industrial gas turbine engine blade having a shank of equiaxed microstructure and an airfoil of columnar microstructure in which grain boundaries extend axially of the blade , the airfoil having a tip portion of microstructure consisting mainly or only of grains of random orientation.

2. A blade of Claim 1 in which the airfoil has directionally solidified columnar microstructure.

3. A blade of Claim 2 in which the microstructure of the bucket tip portion is recrystallized.

4. A blade of Claim 2 in which the tip portion constitutes about one twentieth of the length of the blade airfoil.

5. In the method of producing an industrial gas turbine engine blade which includes the steps of forming the blade with a shank of equiaxed microstructure and an airfoil of columnar grain microstructure, the combination of the step of recrystallizing the columnar grain microstructure at the tip of the airfoil to substantially completely transform the tip microstructure from columnar grain to equiaxed grain and random grain boundary orientation.

6. The method of Claim 5 of which the recrystallization comprises heat treating the tip portion of the airfoil.

7.  The method of Claim 5, including the steps of cold working the tip portion of the airfoil and then heat treating the cold worked airfoil tip portion.

8.  The method of Claim 7 in which the cold working consists of shop peening the airfoil and thereby inducing high residual stresses.

9.  The method of Claim 8 including the steps of masking the airfoil, except for the tip portion before shot peening to induce high residual stress, and then zone heat treating the tip portion.

FIG.1.

**European Patent Office**

## EUROPEAN SEARCH REPORT

Application Number

EP    91 30 9694

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | PATENT ABSTRACTS OF JAPAN vol. 7, no. 145 (M-244)(1290) 24 June 1983 & JP-A-58 057 005 ( HITACHI SEISAKUSHO ) 5 April 1983 | 1-4 | F01D5/28 |
| Y | * abstract *<br>--- | 5-8 | |
| Y | US-A-4 345 950 (O'HARA)<br>* the whole document *<br>--- | 5-8 | |
| Y | US-A-4 799 974 (MAHONEY)<br>* the whole document *<br>--- | 5-8 | |
| A | US-A-2 920 007 (BUCKLAND)<br>* the whole document *<br><br>----- | 1,5 | |
| | | | **TECHNICAL FIELDS SEARCHED (Int. Cl.5)**<br><br>F01D |

The present search report has been drawn up for all claims

| Place of search | Date of completion of the search | Examiner |
|---|---|---|
| THE HAGUE | 12 FEBRUARY 1992 | SERRANO GALARRAGA J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)